# EUROPEAN PATENT SPECIFICATION

(11) **EP 0 500 216 B1**
(45) Date of publication and mention of the grant of the patent: **19.07.1995**
(21) Application number: 92300651.4
(22) Date of filing: 24.01.1992
(51) Int. Cl.: F16L 11/00, F16B 4/00, H01R 4/72

(54) **Removable core for a shrinkable tubular sheath and method and apparatus for producing same**
Abnehmbarer Kern für eine schrumpffähige Rohrhülse und Methode und Apparat zur Herstellung desselben
Intérieur démontable pour une couvre-joint tubulaire de retrait et méthode et appareil pour production similaire

(30) Priority: 19.02.1991 US 656871
(43) Date of publication of application: 26.08.1992
(73) Proprietor: ATCOFLEX, Inc., Grand Haven, Michigan 49417 (US)
(72) Inventor: Tuggle, William H., Jr., Spring Lake, Michigan 49456 (US)
(74) Representative: Robinson, Anthony John Metcalf

(56) References cited:
- EP-A- 0 295 058
- DD-A- 243 741

## Description

The present invention relates to a removable core for use in installing a shrinkable tubular sheath, and to a method and apparatus for producing such a removable core.

It is known in the prior art to provide a shrinkable protective sheath installed by the use of a removable core assembly around which the sheath is temporarily stretched. For example US-A-3515798 describes an elastic cover and removable core assembly used for the application of the elastic cover as a protective sheath in an electrical cable splice. The removable core is formed as a rigid sleeve having a helical, V-shaped groove formed around its outer surface. An elastically shrinkable tubular cover is stretched around the outside of the core. This assembly is placed around the cable splice. The groove allows an end of the core to be pulled and stripped away in the manner of uncoiling a helically coiled strip. As the strip is progressively pulled and removed, the core is thereby withdrawn, and the tubular cover shrinks to tightly cover the splice.

Although shrinkable sheath and removable core assemblies have been known, difficulties have been encountered in manufacturing a removable core having characteristics suitable for use in such an assembly. As stated in US-A-4503105 which discloses a removable core assembly, it has been found to be impractical to make the core by making a continuous helical cut in a tube having a uniform wall thickness. According to that Patent, problems arise because of the difficulty of maintaining the cut at a given depth due to variations in the roundness and the wall thickness of the core and the movement of a cutter in cutting. Variations in the depth of the groove cut result in a core having insufficient strength to resist the shrinkage force of the tubular cover, or in a core which is too difficult to be manually broken into a strip. To that effect, US-A-4503105 describes a removable core having adjacent windings of the helically formed strip joined only at spaced intervals by lengthwise lugs formed along the inside of the core. Such a construction is necessarily more complicated to produce, uses excessive material, and provides a strip which provides resistance to uncoiling in a series of jerks, rather than a preferable smooth, continuous resistance.

Thus, there is an unmet need for a removable core which provides the proper degree of strength before uncoiling, which is readily and smoothly uncoiled, yet which is simply and economically produced.

According to one aspect of the present invention, a removable core for a shrinkable tubular sheath comprising a tubular wall having a helical weakened line therein is characterised in that the tubular wall is formed from a plurality of helically wrapped, overlapping, laminated layers of a continuous web.

According to a second aspect of the invention, a method of producing a removable core from a shrinkable sheath comprises helically wrapping an advancing web of material into a tube having a wall formed of a plurality of overlapping layers of said web, forming a weakened helical line in said wall, and cutting said tube to desired lengths.

According to a third aspect of the invention, an apparatus for producing a removable core for a shrinkable sheath comprises means for forming an advancing web of material; means for helically wrapping said web into a tube having a wall formed of a plurality of overlapping layers of said web; and means for forming a weakened helical line in said wall.

The present invention thus satisfies the aforementioned need by providing a removable core for a shrinkable tube, and a method and apparatus for making such a core, in which a helical groove is formed in the core as an integral part of the manufacture of the core itself.

In a preferred example, the web is formed by extrusion from a die near a rolling apparatus which has a plurality of elongated rollers having their longitudinal axes helically skewed and spaced around a common axis, equally distant from the common axis, thereby defining a cylindrical envelope. The rollers all co-rotate in a common direction and speed. The advancing web, while still heated from the extrusion process, is taken up by the skewed rollers such that the web is helically wrapped around the rollers. The wrappings overlap, thereby forming a lamination of layers of the web. The wrappings thus continuously form a cylindrical tube, the wall of the tube being made up of the laminations of the web.

As the tube is formed, it advances on the rollers. The heat of the wrappings causes them to bind together. A pressure roller is preferably provided along the exterior of the newly formed tube to exert compression on the laminations to enhance the binding, to make the surface more smooth, and to maintain tension in the web.

According to one embodiment of the invention, there is a knife blade held against the surface of the tube substantially simultaneously with the formation of the wall. The blade makes a continuous helical cut partially through the thickness of the wall of the tube. The cut produces a weakened line along which the removable core of the invention may be uncoiled into a strip the edges of which are defined by the weakened line.

The tube is preferably cooled by blown air and cut to desired lengths, thus forming the removable cores. Shrinkable sheaths are then stretched over the cores to provide assemblies for splicing cables, stabilizing injured limbs, and other uses.

The thickness of the removable core wall may be selectively determined by the width of the web of material and the degree of helical skewing of the rollers. In preferred embodiments, the core wall is a lamination of three or four overlapping layers of the web. However, in alternate embodiments, more or fewer layers may be employed. In the event only two layers are employed, the weakened line is naturally formed along the edges of the web, and the knife cut may be omitted.

In other embodiments, the web of material from which the tube is made may be formed with a continuous longitudinal notch. The notch may be formed with a tool on or near the die, or by a protrusion in the die opening. When the web is wrapped into a tube, the notch forms the weakened line for uncoiling the tube.

The invention may be carried into practice in various ways but a removable core and its method of manufacture and apparatus employed in the manufacture together with some modifications, all in accordance with the invention will now be described by way of example with reference to the accompanying drawings, in which:
Fig. 1 is a top plan view, partially sectioned, of a shrinkable tubular sheath and removable core assembly according to the principles of the invention, illustrating the installation of the sheath around a splice of an electrical cable;
Fig. 2 is a top plan view of an apparatus for producing a removable core according to the invention;
Fig. 3 is a sectional view taken substantially along the line 3-3 of Fig. 2;
Fig. 4 is an end elevational view of the apparatus of Fig. 2 taken along the line 4-4 of Fig. 2;
Fig. 5 is an end elevational view of the apparatus of Fig. 2 taken along the line 5-5 of Fig. 2;
Fig. 6 is a perspective, fragmentary view of a removable core according to the invention;
Fig. 7 is a sectional view taken along the line 7-7 of Fig. 6;
Fig. 8 is similar to Fig. 7, but illustrates a thinner wall thickness of the removable core;
Fig. 9 is also similar to Fig. 7, but illustrates a thinner yet wall thickness;
Fig. 10 is an elevational view of a notched die opening according to an alternate embodiment of the invention; and
Fig. 11 is a sectional view similar to Fig. 9 but illustrating a tube formed of a continuously notched web.

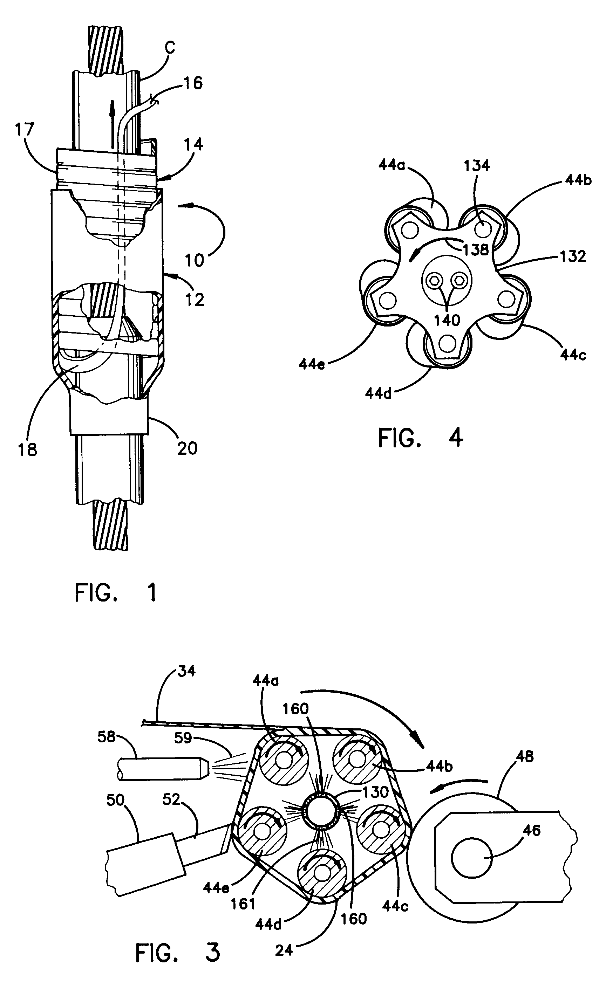

By way of disclosing a preferred embodiment of the invention, and not by way of limitation, there is shown in Fig. 1 an assembly 10 of a shrinkable, elastic, tubular sheath 12 and a removable core 14 being used to protect a splice in an electrical cable C. In the initial state of the assembly 10, the sheath 12 is tightly stretched around the outside of the intact core 14. One end 16 of the coiled strip 17 of the core is free, being uncoiled at the lower, or far end of the core, as designated at 18, and passing through the interior of the core and out the upper, or near end of the core.

Before the splice is made, the assembly 10 is passed over a free end of the cable. The cable ends are joined, and the assembly is centered around the splice. While holding the assembly in position, the free end 16 is pulled, causing the strip 17 to uncoil at 18. As the strip is pulled, the core is progressively withdrawn at 18, allowing the lower end 20 of the sheath to shrink tightly around the cable. Pulling of the strip is continued until the entire core 14 is withdrawn, leaving the splice completely protected by the sheath 12.

In a manner described more fully below, the removable core 14 is provided with sufficient strength to resist the compressive forces of the tightly fitting sheath 12 and prevent collapse of the assembly, yet to allow the strip 17 to be readily, uniformly, and smoothly uncoiled.

Figs. 2 through 5 illustrate the apparatus and method for producing the removable core 14 according to the invention. Certain features of such apparatus are generally well known to those having skill in the art, as illustrated, for example, in UK-A-1451469. In its general organization, the apparatus includes an extruder 30 positioned near a rolling apparatus 40. The extruder includes, in a well known manner (not shown in the figures), a hopper of pelletized plastic material, a heater for melting the material, and a ram for forcing the molten or softened material through a die. The die 32 is configured to extrude the material into a relatively thin, continuous web 34.

The rolling apparatus 40, includes a drive means 42, and five elongated cylindrical forming rollers 44a-44e extending horizontally outwardly from the drive means 42. The longitudinal axes of the forming rollers 44a-44e are generally parallel to, equidistant from, and equally spaced around the axis 43 of the core to be formed. However, the rollers are helically skewed as described below. The drive means 42 is provided to drivingly co-rotate the forming rollers 44a-44e in a common direction and speed as indicated by the arrows in Fig. 3. The outer extent of the forming rollers are disposed within a cylindrical envelope coincident with the inner surface of the inner wall surface of the removable core 14 to be formed thereon.

The drive means 42 includes in its general organization an electric motor 102 with a motor drive gear 103, a drive chain 104, a linking chain 106, a support frame 108, five flexible drive shafts, three of which designated at 110a-110c (two others being hidden from view) support plates 112 and 114, five outer drive gears 116a-116e, and five inner drive gears, three of which are designated at 118a-118c (two others being hidden from view). The inner and outer drive gears are fixedly mounted on five drive shafts 120a-120e which, in turn, are drivingly connected to the flexible drive shafts 110a-110c etc.

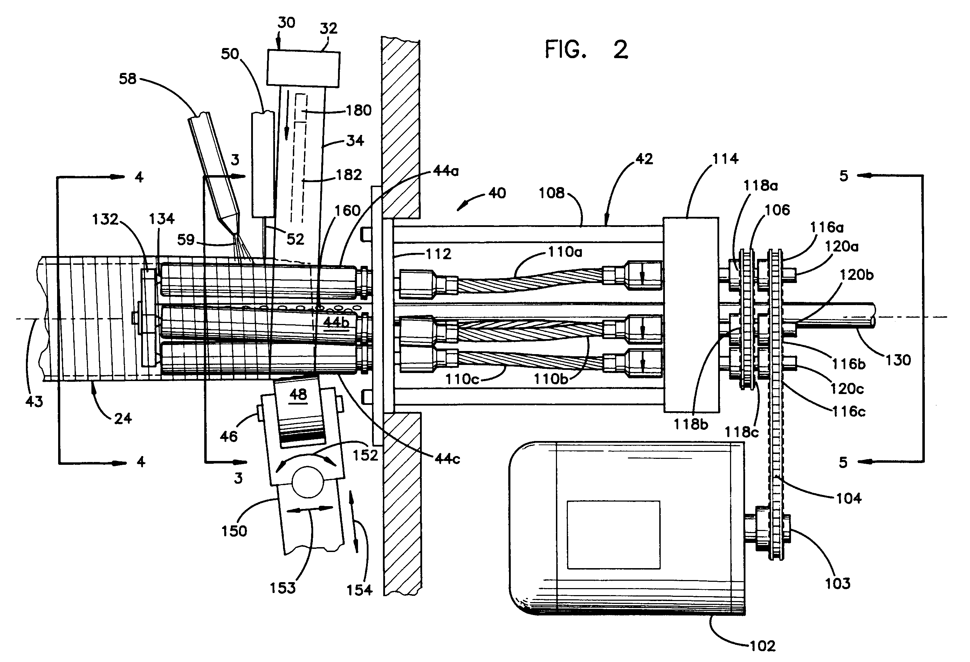

Electric motor 102 rotates motor drive gear 103 which, in turn, drives drive chain 104. As best shown in Fig. 5, drive chain 104 engages outer drive gears 116a, 116b, 116d and 116e, thus rotating the corresponding drive shafts 120a, 120b, 120d, and 120e. The rotation of these drive shafts also rotates the commonly mounted inner drive gears 118a etc. All five of the inner drive gears 118a etc. are linked by linking chain 106, thus causing all five drive shafts 120a etc. to rotate in a common direction and speed.

The drive shafts 120a etc. in turn cause the flexible drive shafts 110a etc. to commonly rotate. The flexibility of these drive shafts 110a etc. transfers the rotational motion from the larger circumference encompassing the gears 118a etc. to the smaller circumference encompassing the forming rollers 44a etc.

A pipe 130 extends from the rear of the apparatus through the drive means and to the forward end of the forming rollers 44a etc. At the forward end of the pipe, an end plate 132 is fixed to the end of the pipe. The end plate carries five pin bearings such as bearing 134 disposed equally spaced about a circle. The forming rollers 44a etc. each extend from a pin bearing 134 rearwardly to a support plate 112 where they are journalled for rotation and driven by the flexible drive shafts 110a etc.

The longitudinal axes of the forming rollers are not parallel to the longitudinal axis of the apparatus 40 but are instead slightly helically skewed. As best shown in Fig. 4, the ends of the forming rollers 44a etc. supported on the pin bearings 134 of end plate 132 are offset slightly counterclockwise with respect to the opposite ends of the forming rollers journalled on plate 112 as indicated by arrow 138. A clamp with tightening screws 140 is provided to allow for adjustment of the amount of helical skewing of the forming rollers.

As best shown in Figs. 2 and 3, the freshly extruded hot web 34 emerges from the die 32 near the rolling apparatus 40 in a direction tangent to the cylindrical envelope of the forming rollers 44a-44e. The rotation of the forming rollers takes up the web as it advances, thereby wrapping the web into a cylindrical, continuous tube 24. Although the finished tube is cylindrical, while being formed on the rollers the tube is distorted somewhat. As shown in Fig. 3, the newly formed tube is somewhat pentagonal, but will assume a circular cross-section when advanced off the rollers.

The helical skewing of the rollers 44a etc. causes the tube 24 thus formed to advance outwardly along the forming rollers. The rate of advancement corresponds to the degree of skewing of the forming rollers. In the embodiment shown in Fig. 2, each turn of the tube 24 advances the tube by one-quarter of the width of the web 34. As a result, and as shown in Fig. 7, the thickness of wall of the tube generally comprises four layers of the web.

Referring again to Figs. 2 and 3, as the web 34 is taken up by the rollers, the web advances to a pressure roller 48 rotatably supported on a shaft 46 adjacent and spaced apart from the outer extent of forming roller 44c. The wall of the tube 24 is compressed between the pressure roller 48 and the forming roller 44c with sufficient pressure to enhance the bond between the overlying layers of the wrapped, hot web. The pressure applied is not so great as to cause substantial deformation of the web. The formation of the bond is primarily obtained by the heat still present in the web from the extrusion process used in its formation.

The pressure roller 48 is carried on a mounting 150 which enables the pressure roller to be swivelled, as indicated by arrow 152, and adjusted upstream, downstream, in, and out, as indicated by arrows 153 and 154. Adjustment of the pressure roller is necessary to adapt the apparatus to various widths of webs and to obtain the proper pressure.

Positioned generally oppositely of the pressure roller 48 there is a knife holder 50 holding a knife blade 52. The blade 52 is held so that it cuts partially through the thickness of the wall of the tube 24. It has been found that a cut approximately through all but the innermost web wrapping provides appropriate strength and uncoilability in the removable core for use with a cable splice cover. However, different depths of cut may be used within the scope of the present invention according to the type of material used, the core strength desired, and other factors. The pressure roller 48 serves to provide a driving force and to maintain tension in the tube being formed so that the knife does not drag the web material.

The cut made by the blade 52 forms a continuous, helical groove 56 in the exterior of the wall of the tube 24. According to the embodiment of the invention shown in Fig. 2, the groove 56 is coincident with the seam 54 formed at the edge of the wrapped web 34; however, other locations of the groove 56 with respect to the seam may be employed.

As the tube 24 continues to advance outwardly away from the knife blade 52, it is cooled by a jet of air 59 from the nearby nozzle 58. Nozzle 58 is shown directed at the exterior of the tube. If desired, an additional nozzle may be provided to direct a flow cooling air at the interior of the tube. As shown in Figs. 2 and 3, the forward end of the pipe 130 is formed with perforations 160 through which cooling air 161 is also blown. An ample flow of cooling air is necessary to harden the tube as soon as possible after its formation.

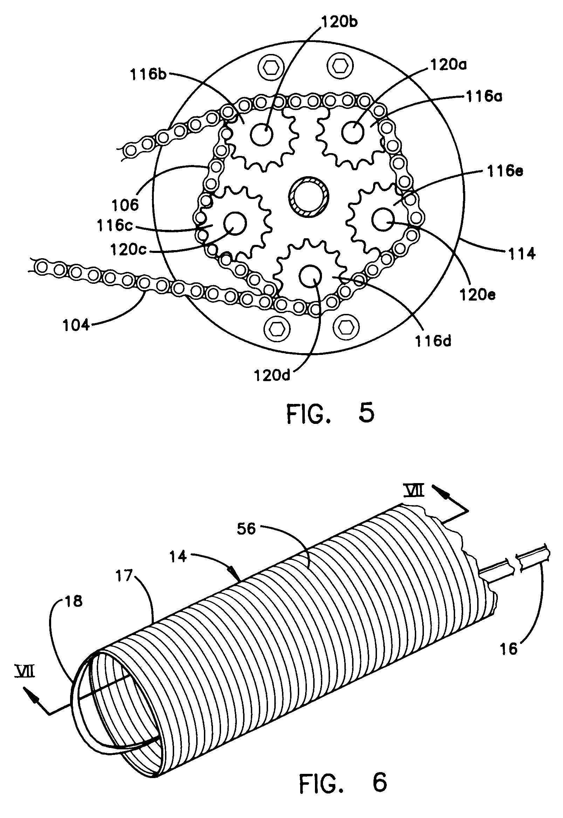

After the tube 24 has advanced past the pressure roller 48, knife 42, and nozzle 58, it is cut to desired lengths by an appropriate cutting device (not shown), thus forming removable cores 14, as further shown in Fig. 6. Either before or after the shrinkable sheath is placed on the core, an end 16 of the strip 17 formed between adjacent turns of the groove 56 is pulled away as at 18 and pulled through the interior of the core 14 in readiness to be grasped and pulled for installation of the sheath.

The construction of the wall of the removable core 14 may be seen in greater detail in Fig. 7. The wall is a lamination of four thicknesses of the web 34. The groove 56 formed by the cut of the knife blade 52 is disposed at the leading edge of the web 34 and extends downwardly through to the innermost layer of the web. To form this wall, the described apparatus was arranged so that the tube 24 advanced one-quarter of the width of the web with each turn. A deeper cut may be employed if easier uncoiling is desired, such as for use with a shrinkable limb cast or splint. A shallower cut may be employed if a very tight sheath is used around the core.

Although individual layers of the web are depicted in Fig. 5, it is to be noted that in the finished product the bonding of the layers due to the heat and pressure applied may be such that the layers will not be distinguishable. In other words, the wall will be substantially unitary and monolithic. Nevertheless, the present invention includes within its scope only cores having walls made of a plurality of layers of material.

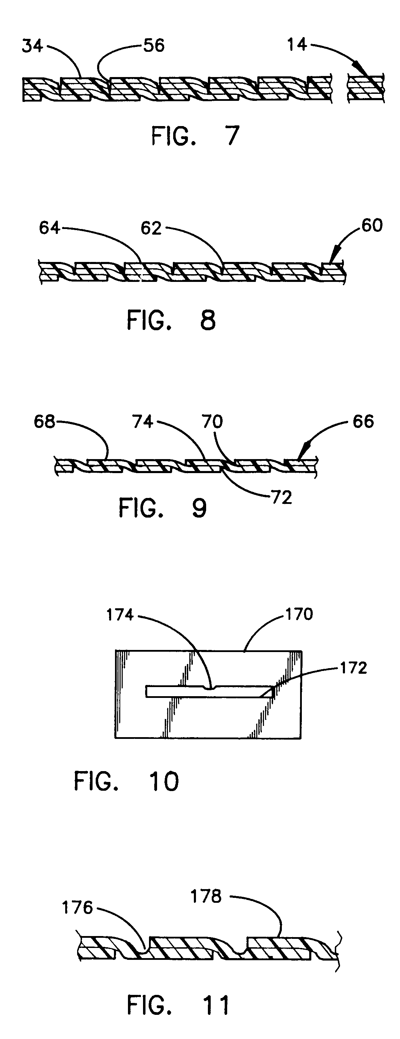

In Figs. 8 and 9, other possible thicknesses of the wall of the removable core are shown. In Fig. 8, the wall of a core 60 is formed of three layers of a web 64, the wrappings of the web overlapping by one-third of the width of the web. The groove 62 extends halfway through the thickness of the middle layer of the web. In Fig. 9, the wall of core 66 is formed of only two layers of web 68 and without the use of a knife. Adjacent the leading edge 70 and trailing edge 72 there are natural grooves formed without cutting. Between these edges 70 and 72 there is but a single layer of the web 68. These grooves and single layer of web form a weakened line for facilitating the uncoiling of the strip 74.

For clarity of illustration purposes, Figs. 7-9 depict the walls of the various embodiments of the removable core 14, 60, and 66, as having sharply formed cuts, grooves, and leading and trailing edges of the web of material. However, it should be noted that the plastic material used for the cores may shrink somewhat after being cut and/or cooled, resulting in somewhat smoother and more curvilinear cross-sections than those shown in the Figures.

The material used for the removable cores is preferably polypropylene impact copolymer grade plastic material, although other materials may be used as will be apparent to those skilled in the art. An appropriate finished wall thickness for a removable core to be used with a cable splice sheath is 1.65 mm (.065 inch).

Fig. 10 shows an alternate means for producing a weakened line in the tube. In this embodiment the extrusion die used in the formation of the web is provided with an opening 172 having a small protrusion 174 extending partially into the opening at approximately the centre of the upper extent of the opening. The protrusion will create a continuous longitudinal notch in the web. As shown in Fig. 11, the notch 176 formed in the web 178 provides a weakened groove line in the tube wall for uncoiling the tube.

A further alternate means for producing a weakened line in the tube is shown in broken lines in Fig. 2 and includes a notching tool 180 positioned adjacent the exit of the extrusion die 32. The tool 180 forms a continuous longitudinal notch 182 in the web as the web passes the tool.

## Claims

1. A removable core (14) for a shrinkable tubular sheath (12) comprising a tubular wall having a helical weakened line (56) therein characterised in that the tubular wall is formed from a plurality of helically wrapped, overlapping, laminated layers of a continuous web (34).

2. A removable core according to claim 1 wherein said weakened line (56) comprises a continuous, helical groove formed partially through the thickness of said wall.

3. A removable core according to claim 2 wherein said groove extends through all but the innermost layer of said web.

4. A removable core according to claim 2 or claim 3 wherein said groove is formed adjacent an edge of said web.

5. A removable core according to claim 1 wherein said helical weakened line comprises a continuous longitudinal notch (176;182) formed in said web.

6. A removable core according to any of claims 1 to 5 in combination with an elastic, shrinkable tubular sheath (12) carried in a stretched condition on the outside of said core (14).

7. A method for producing a removable core (14) for a shrinkable sheath (12) comprising helically wrapping an advancing web of material (34) into a tube (24) having a wall formed of a plurality of overlapping layers of said web, forming a weakened helical line (56) in said wall, and cutting said tube to desired lengths.

8. A method according to claim 7 wherein the advancing web of material (34) is provided by extruding a heated plastic material, preferably near said wrapping.

9. A method according to claim 7 or claim 8 wherein said wrapping comprises helically wrapping said web around a plurality of helically skewed forming rollers (44a-44e) having their outer extents defining a cylindrical envelope.

10. A method according to claim 7 or claim 8 or claim 9 which includes applying pressure to said overlapping layers.

11. A method according to any of claims 7 to 10 in which the weakened helical line is formed by cutting partially through the thickness of said wall.

12. A method according to any of claims 7 to 10 in which the weakened helical line is formed by producing a continuous longitudinal notch (176;182) in said web, preferably in the course of extrusion.

13. An apparatus for producing a removable core (14) for a shrinkable sheath (12) comprising means (30,32) for forming an advancing web (34) of material; means (44a-44e) for helically wrapping said web into a tube having a wall formed of a plurality of overlapping layers of said web; and means (50,52:180:174) for forming a weakened helical line in said wall.

14. An apparatus according to claim 13 comprising means for cutting said tube into desired lengths.

15. An apparatus according to claim 13 or claim 14 comprising means for causing said layers of said web to form a lamination bond therebetween, preferably means 48 for applying pressure.

16. An apparatus according to any of claims 13 to 15 wherein said means for helically wrapping said web comprises a plurality of helically skewed forming rollers (44a-44e) having their outer extent defining a cylindrical envelope about a central axis.

17. An apparatus according to any of claims 13 to 16 wherein said means for forming a weakened helical line comprises a knife blade (52) held against said wall and cutting a groove (56) partially through the thickness of said wall and preferably approximately through all but the innermost layer of said web.

18. An apparatus according to any of claims 13 to 16 wherein said means for forming a weakened line comprises an extrusion die (170) used as said means for forming an advancing web, the opening (172) of said die having a protrusion (174) to form a continuous longitudinal notch in said web.

19. An apparatus according to any of claims 13 to 16 wherein said means for forming a weakened line comprises a notching tool (180) for forming a continuous longitudinal notch (182) in said web after said web is formed.

## Patentansprüche

1. Abnehmbarer Kern (14) für eine schrumpffähige Rohrhülse (12) mit einer röhrenartigen Wandung, die eine spiralförmige geschwächte Linie (56) hat, **dadurch gekennzeichnet, daß** die röhrenförmige Wandung aus einer Vielzahl von spiralförmig gewickelten, überlappenden, laminierten Schichten eines kontinuierlichen Gewebes (34) ausgebildet ist.

2. Abnehmbarer Kern nach Anspruch 1, **dadurch gekennzeichnet, daß** die geschwächte Linie (56) eine kontinuierliche, spiralförmige Nut umfaßt, die teilweise durch die Dicke der Wandung ausgebildet ist.

3. Abnehmbarer Kern nach Anspruch 2, **dadurch gekennzeichnet, daß** sich die Nut durch alle ausgenommen der innersten Schicht des Gewebes erstreckt.

4. Abnehmbarer Kern nach Anspruch 2 oder 3, **dadurch gekennzeichnet, daß** die Nut angrenzend an die Kante des Gewebes ausgebildet ist.

5. Abnehmbarer Kern nach Anspruch 1, **dadurch gekennzeichnet, daß** die schraubenförmig geschwächte Linie eine kontinuierliche Längskerbe (176; 182) umfaßt, die in dem Gewebe ausgebildet ist.

6. Abnehmbarer Kern nach einem der Ansprüche 1 bis 5, in Kombination mit einer elastischen, schrumpffähigen Rohrhülse (12), die in gestrecktem Zustand auf der Außenseite des Kernes (14) gehalten ist.

7. Verfahren zur Herstellung eines abnehmbaren Kernes (14) für eine schrumpffähige Rohrhülse (12), **dadurch gekennzeichnet, daß** es das spiralförmige Wickeln eines fortschreitenden Materialgewebes (34) in eine Röhre (24) umfaßt, die eine Wandung hat, die aus einer Vielzahl von überlappenden Schichten des Gewebes gebildet ist, wobei in der Wandung eine geschwächte spiralförmige Linie (56) ausgebildet wird und die Röhre in gewünschte Längen geschnitten wird.

8. Verfahren nach Anspruch 7, **dadurch gekennzeichnet, daß** das fotschreitende Materialgewebe (34) durch Extrudieren eines aufgeheizten Kunststoffmateriales, vorzugsweise in der Nähe der Umwicklung vorgesehen ist.

9. Verfahren nach Anspruch 7 oder 8, **dadurch gekennzeichnet, daß** das Umwickeln ein spiralförmiges Wickeln des Gewebes um eine vielzahl von spiralförmig abgeschrägten Formrollen (44a bis 44e) umfaßt, deren äußere Erstreckungen eine zylindrische Hülle definieren.

10. Verfahren nach Anspruch 7, 8 oder 9, **dadurch gekennzeichnet, daß** das Aufbringen eines Druckes auf die überlappenden Schichten eingeschlossen ist.

11. Verfahren nach einem der Ansprüche 7 bis 10, **dadurch gekennzeichnet, daß** die geschwächte spiralförmige Linie ausgebildet ist, indem teilweise durch die Dicke der Wandung geschnitten wird.

12. Verfahren nach einem der Ansprüche 7 bis 10, **dadurch gekennzeichnet, daß** die geschwächte spiralförmige Linie durch Herstellen einer kontinuierlichen Längskerbe (176; 182) in dem Gewebe ausgebildet ist, vorzugsweise während der Extrusion.

13. Vorrichtung zur Herstellung eines abnehmbaren Kernes (14) für eine schrumpffähige Hülse (12) mit Einrichtungen (30, 32) zur Ausbildung eines fortschreitenden Materialgewebes (34); Einrichtungen (44a bis 44e) zur spiralförmigen Wicklung des Gewebes in eine Röhre, die eine aus einer Vielzahl von überlappenden Schichten des Gewebes ausgebildete Wandung hat; und Einrichtungen (50, 52: 180: 174) zur Ausbildung einer geschwächten spiralförmigen Linie in der Wandung.

14. Vorrichtung nach Anspruch 13, **gekennzeichnet durch** Einrichtungen zum Schneiden der Röhre in gewünschte Längen.

15. Vorrichtung nach Anspruch 13 oder 14, **gekennzeichnet durch** Einrichtungen die die Schichten des Gewebes veranlassen, eine Laminatverbindung zwischen sich auszubilden, vorzugsweise Einrichtungen 48 zur Aufbringung von Druck.

16. Vorrichtung nach einem der Ansprüche 13 bis 15, **dadurch gekennzeichnet, daß** die Einrichtungen zur spiralförmigen Wicklung des Gewebes eine Vielzahl von spiralförmig abgeschrägten Formrollen (44a bis 44e) umfassen, deren äußere Erstreckungen eine zylindrische Umhüllung um eine Mittelachse definieren.

17. Vorrichtung nach einem der Ansprüche 13 bis 16, **dadurch gekennzeichnet, daß** die Einrichtungen zur Ausbildung einer geschwächten spiralförmigen Linie eine Messerklinge (52) umfassen, die gegen die Wandung gehalten wird und eine Nut (56) teilweise durch die Dicke der Wandung schneidet, vorzugsweise annähernd durch alle außer der innersten Schicht des Gewebes.

18. Vorrichtung nach einem der Ansprüche 13 bis 16, **dadurch gekennzeichnet, daß** die Einrichtungen zur Ausbildung einer geschwächten Linie eine Extrusionsdüse (170) umfassen, die als Einrichtung zur Ausbildung eines fortschreitenden Gewebes genutzt wird, wobei die Öffnung (172) der Düse einen Vorsprung (174) hat, um eine kontinuierliche Längskerbe in dem Gewebe auszubilden.

19. Vorrichtung nach einem der Ansprüche 13 bis 16, **dadurch gekennzeichnet, daß** die Einrichtungen zur Ausbildung einer geschwächten Linie ein Kerbwerkzeug (180) umfassen, zur Ausbildung einer kontinuierlichen Längskerbe (182) in dem Gewebe, nachdem das Gewebe ausgebildet ist.

## Revendications

1. Noyau amovible (14) pour une gaine tubulaire rétractable (12), comprenant une paroi tubulaire pourvue d'une ligne hélicoïdale d'affaiblissement (56), caractérisé en ce que la paroi tubulaire est formée de plusieurs couches d'une bande continue (34) qui sont enroulées en hélice en condition de recouvrement mutuel.

2. Noyau amovible selon la revendication 1, dans lequel ladite ligne d'affaiblissement (56) comprend une rainure hélicoïdale continue traversant partiellement l'épaisseur de ladite paroi.

3. Noyau amovible selon la revendication 2, dans lequel ladite rainure s'étend à travers toutes les couches de ladite bande, sauf la couche complètement intérieure.

4. Noyau amovible selon la revendication 2 ou la revendication 3, dans lequel ladite rainure est formée adjacente à un bord de ladite bande.

5. Noyau amovible selon la revendication 1, dans lequel ladite ligne hélicoïdale d'affaiblissement comprend une encoche longitudinale continue (176 ; 182) formée dans ladite bande.

6. Noyau amovible selon une quelconque des revendications 1 à 5, en combinaison avec une gaine tubulaire élastique rétractable (12), supportée dans un état d'extension allongée par le côté extérieur dudit noyau (14).

7. Procédé de production d'un noyau amovible (14) pour une gaine rétractable (12), consistant à enrouler en hélice une bande de matière en progression (34) sous forme d'un tube (24) comportant une paroi formée de plusieurs couches de ladite bande en condition de recouvrement mutuel, à former une ligne hélicoïdale d'affaiblissement (56) dans ladite paroi et à sectionner ledit tube à des longueurs désirées.

8. Procédé selon la revendication 7, où la bande de matière en progression (34) est créée par extrusion d'une matière plastique chauffée, de préférence à proximité dudit poste d'enroulement.

9. Procédé selon la revendication 7 ou la revendication 8, où ladite étape d'enroulement consiste à enrouler en hélice ladite bande autour de plusieurs rouleaux de formage (44a - 44e) avec inclinaison hélicoïdale, dont les périphéries extérieures définissent une enveloppe cylindrique.

10. Procédé selon la revendication 7 ou la revendication 8 ou la revendication 9, qui consiste à appliquer une pression auxdites couches en condition de recouvrement.

11. Procédé selon une quelconque des revendications 7 à 10, où la ligne hélicoïdale d'affaiblissement est formée par un découpage à travers une partie de l'épaisseur de ladite paroi.

12. Procédé selon une quelconque des revendications 7 à 10, où la ligne hélicoïdale d'affaiblissement est créée par formation d'une encoche longitudinale continue (176 ; 182) dans ladite bande, de préférence en cours d'extrusion.

13. Appareil pour produire un noyau amovible (14) pour une gaine rétractable (12), comprenant des moyens (30, 32) pour mettre en forme une bande de matière en progession (34) ; des moyens (44a - 44e) pour enrouler en hélice ladite bande sous forme d'un tube ayant une paroi formée de plusieurs couches de ladite bande en condition de recouvrement mutuel ; et des moyens (50, 52 ; 180 ; 174) pour former une ligne hélicoïdale d'affaiblissement dans ladite paroi.

14. Appareil selon la revendication 13, comprenant des moyens pour sectionner ledit tube à des longueurs désirées.

15. Appareil selon la revendication 13 ou la revendication 14, comprenant des moyens pour faire en sorte que lesdites couches de ladite bande forment entre elles un joint par stratification, de préférence des moyens (48) pour appliquer une pression.

16. Appareil selon une quelconque des revendications 13 à 15, dans lequel lesdits moyens pour enrouler en hélice des bandes comprennent plusieurs rouleaux de formage (44a - 44e) avec inclinaison hélicoïdale, dont les périphéries extérieures définissent une enveloppe cylindrique autour d'un axe central.

17. Appareil selon une quelconque des revendications 13 à 16, dans lequel lesdits moyens de formation d'une ligne hélicoïdale d'affaiblissement comprennent une lame de coupe (52) maintenue contre ladite paroi et découpant une rainure (16) à travers une partie de l'épaisseur de ladite paroi, et de préférence approximativement à travers toutes les couches de ladite bande sauf la couche complètement intérieure.

18. Appareil selon une quelconque des revendications 13 à 16, dans lequel lesdits moyens de formation d'une ligne d'affaiblissement comprennent une matrice d'extrusion (170) utilisée comme ledit moyen de formation d'une bande en progression, l'orifice (172) de ladite matrice comportant une saillie (174) pour former une encoche longitudinale continue dans ladite bande.

19. Appareil selon une quelconque des revendications 13 à 16, dans lequel lesdits moyens de formation d'une ligne d'affaiblissement comprennent un outil d'encochage (180) pour former une encoche longitudinale continue (182) dans ladite bande après que cette bande a été formée.
